# EUROPEAN PATENT APPLICATION

(11) **EP 2 639 710 A2**
(43) Date of publication of application: **18.09.2013**
(21) Application number: 12187756.7
(22) Date of filing: 09.10.2012
(51) Int. Cl.: G06F 17/30

(54) **A method for metadata persistence**

(30) Priority: 12.01.2012 US 201213348799
(71) Applicant: LSI Corporation, Milpitas, CA 95035 (US)
(72) Inventor: Bhatta, Vigneshwara, 560078 Bangalore (IN)
(74) Representative: Williams, David John

(57) **Abstract**

Providing automatic updating of the mapped and unmapped extents in the metadata disk layout for a transaction. A transaction contains mapped and unmapped extents changes. The mapped extents changes can be anywhere in the metadata data disk area of 10MB and also the unmapped area. A write journal will be added to every migration. For every migration a transaction is created and that contains mapped and unmapped changes. After reboot write journal will be applied. For providing greater data integrity block level sequence number, block number and CRC is maintained for secondary and primary copy.

## Description

### BACKGROUND

Hierarchical storage management (HSM) is a data storage technique which automatically moves data between high-cost and low-cost storage media - hot tier and cold tier. HSM systems exist because high-speed storage devices, such as hard disk drive arrays, are more expensive (per byte stored) than slower devices, such as optical discs and magnetic tape drives. HSM systems store the bulk of the enterprise's data on slower devices, and then copy data to faster disk drives when needed. In effect, HSM turns the fast disk drives into caches for the slower mass storage devices. The HSM system monitors the way data is used and makes best guesses as to which data can safely be moved to slower devices and which data should stay on the fast devices. In a typical HSM scenario, data files which are frequently used are stored on disk drives, but are eventually migrated to tape if they are not used for a certain period of time, typically a few months. If a user does re-use a file which is on tape, it is automatically moved back to disk storage. The advantage is that the total amount of stored data can be much larger than the capacity of the disk storage available, but since only rarely-used files are on tape, most users will usually not notice any slowdown. HSM is sometimes referred to as tiered storage. HSM (originally DFHSM, now DFSMShsm) was first implemented by IBM on their mainframe computers to reduce the cost of data storage, and to simplify the retrieval of data from slower media. The user would not need to know where the data was stored and how to get it back; the computer would retrieve the data automatically. The only difference to the user was the speed at which data was returned. Later, IBM ported HSM to its AIX operating system, and then to other Unix-like operating systems such as Solaris, HP-UX and Linux. HSM was also implemented on the DEC VAX/VMS systems and the Alpha/VMS systems. The first implementation date should be readily determined from the VMS System Implementation Manuals or the VMS Product Description Brochures. Recently, the development of Serial ATA (SATA) disks has created a significant market for three-stage HSM: files are migrated from high-performance Fibre Channel Storage Area Network devices to somewhat slower but much cheaper SATA disks arrays totaling several terabytes or more, and then eventually from the SATA disks to tape. The newest development in HSM is with hard disk drives and flash memory, with flash memory being over 30 times faster than disks, but disks being considerably cheaper.

### SUMMARY

An embodiment of the invention may therefore comprise a method of metadata persistence in a swapping operation for a tier-drive system. The method may comprise creating a current transaction entry, adding metadata changes to the transaction entry, the extent information comprising mapped and unmapped information, flushing the transaction entry to the metadata disk area by writing, by a write journal, the current transaction entry into a next free entry location in the write journal, updating, by the metadata module, the metadata area based on the current transaction metadata information for the blocks that are affected.

An embodiment of the invention may further comprise a system for metadata persistence when moving data between tiers in a tier-drive system. The system may comprise a host computer, a metadata module, the module comprising a plurality of extents of information, and a write journal. A current transaction entry is created by the host computer and extent information is added to the transaction entry. The transaction entry is flushed to metadata in the metadata module. The transaction is queued to a queue in the write journal, wherein the write journal writes the current transaction entry into a next free entry location. The metadata module updates the metadata based on the current transaction metadata information and flushes any blocks of data that are affected.

### BRIEF DESCRIPTION OF THE DRAWINGS

Figure 1 is a diagram of tier drive layout.

Figure 2 is a diagram of Virtual, mapped extent and unmapped extent.

Figure 3 is a representation of mapped and unmapped extent tables.

Figure 4 a is an example of a TD layout.

Figure 4b shows the initial mapped extent metadata details of Fig 4a.

Figure 4c shows the initial unmapped extent metadata details of Fig. 4a.

Figure 4d shows the metadata entry changes of a hot swap for the TD extent 0 to unmapped extent for Fig. 4b and 4c.

Figure 4e shows metadata entry changes of a hot swap for TD extent 2 to unmapped extent.

Figure 4f shows metadata entry changes of a cold swap for TD extent 17.

Figure 4g shows metadata entry changes of a cold swap of TD extent 0.

Figure 4h shows metadata entry changes of a cold swap of TD extent 2.

Figure 5 shows the data structures of a metadata design.

Figure 6 show a data format for metadata on a disk.

Figure 7 shows on metadata layout on a disk.

Figure 8 is metadata module interface for other modules.

Figure 9 is transaction entry state diagram for a swap operation.

### DETAILED DESCRIPTION OF THE EMBODIMENTS

Conceptually, HSM is analogous to the cache found in most computer CPUs, where small amounts of expensive SRAM memory running at very high speeds is used to store frequently used data, but the least recently used data is evicted to the slower but much larger main DRAM memory when new data has to be loaded.

Data is migrated for many reasons. Some reasons are related to information value changes while others are related to different rationales.

For keeping metadata (mapped and unmapped extents) for a 1TB hot tier size, the metadata is generally kept inside a hot tier virtual drive (VD) of a certain size. It is possible that the metadata (mapped and unmapped) can be modified anywhere inside the area of the hot tier VD during the swapping operation. In order to maintain data integrity after reboot - for a swap operation - mapped relocation information and unmapped information should be maintained (persisted) inside the disk area in an atomic fashion. This means, if mapped is updated and unmapped is not updated, or partial mapped is updated, then there will be data corruption. If a 256K block is utilized for writing the metadata area into the disk then data corruption may ensue. Writing the mapped and unmapped data to disk for every swap operation, needing to update the whole area, entails wasteful use of the area. The hot tier life cycle is reduced due to continuous write to the whole area.

An embodiment of the invention may therefore comprise systems and methods for tiering, for instance, tiering via LSI's Cachecade systems and products inside LSI's MegaRAID card. This embodiment comprises tiering inside a PCI based RAID adapter. A Tier Drive (TD) may be created, which is viewed by a host as a Virtual Drive (VD). Inside the TD data is copied to either a slow drive such as SAS, SATA, hard disks (cold tier) or is copied to a relatively fast drive like SAS, SATA SSD drive (hot tier). The IO on a TD is moved to a hot tier drive if its access required acceleration of the host read and write performance. There may be various methods such as caching the data in DRAM where an SSD drive is available for boosting performance, but the capacity of the faster storage medium may not be available to the user. The capacity of an SSD is included in a TD and tiering accelerates host IO performance. It is understood that those skilled in the art will understand the applicability beyond Cachecade and LSI's MegaRAID card as these are used for example purposes.

In an embodiment of the invention, data is moved between tiers in terms of data units called extents. An extent is a data set containing contiguous blocks of data used for tiering operations. Cold tier data is data that is accessed less often and thereby can be considered relatively less important data for the time. Hot tier data is data that is accessed more often and thereby can be considered relatively more important for the time. Tiering modules swap data between different tiers of a tier-drive. An extent size of 1MB can be used as a data unit of movement and uses metadata interface to keep relocated location (mapped and unmapped data) of an extent of a TD. The tiering feature has two basic swap operations - cold swap and hot swap. The swap operation will take the unmapped extent from the unmapped area - could be on hot or cold tier - and moves the data from the original location in a hot or cold tier and updates the mapped new location and updates the original extent as unmapped. A cold swap operation is moving data from a hot extent to a cold extent and updating the mapped and unmapped metadata section relevant to that data movement. For a cold swap, unmapped area on a cold tier is used. A hot swap operation is moving data from a cold extend to a hot extend and updating the mapped and unmapped metadata section relevant to that data movement. For a hot swap, unmapped area on a hot tier is used.

In an embodiment of the invention, there are three types of extents. A virtual extent is utilized to keep track of the tracking information of a cold tier extent. A mapped extent is utilized to hold the hot tier mapped information and unmapped extent to keep the unmapped extents information of the TD. The 5% of TD hot tier size is reserved for unmapped extents during TD creation. That 5% is not available to the user. After migration this unmapped area can be in cold or hot tier areas. Thus, totally 5% of the TD size is reserved for unmapped extents. The extent which is swapped will be copied to the unmapped extent on the opposite tier (hot extent moved to unmapped cold extent for example). This reduces the number of swap operations and avoids data corruption. Even if a power interruption occurs after the swap operation, until the metadata is updated for mapped and unmapped locations, data will be located at its original location. The percentage of space reserved for unmapped extents could vary depending on the requirement of the performance.

In an embodiment of the invention, for keeping metadata (mapped extents and unmapped extents), for a 1TB hot tier size, we need around 10MB. The metadata will be kept inside a hot tier VD. The metadata disk layout will have a header, journal area, mapped area and unmapped area. It is possible that modification of metadata (mapped and unmapped) can happen anywhere inside the 10MB area of a hot tier VD based on the swap operation. For a swap operation, mapped relocation information and unmapped information should be persisted inside the disk in an atomic fashion to ensure the data integrity after reboot. This means that if mapped data is updated and unmapped data is not updated, or mapped data is partially updated, then there will be data corruption. In an embodiment of the invention, a transaction is created per swap operation. The transaction will be written to the journal area before updating the mapped and unmapped extents.

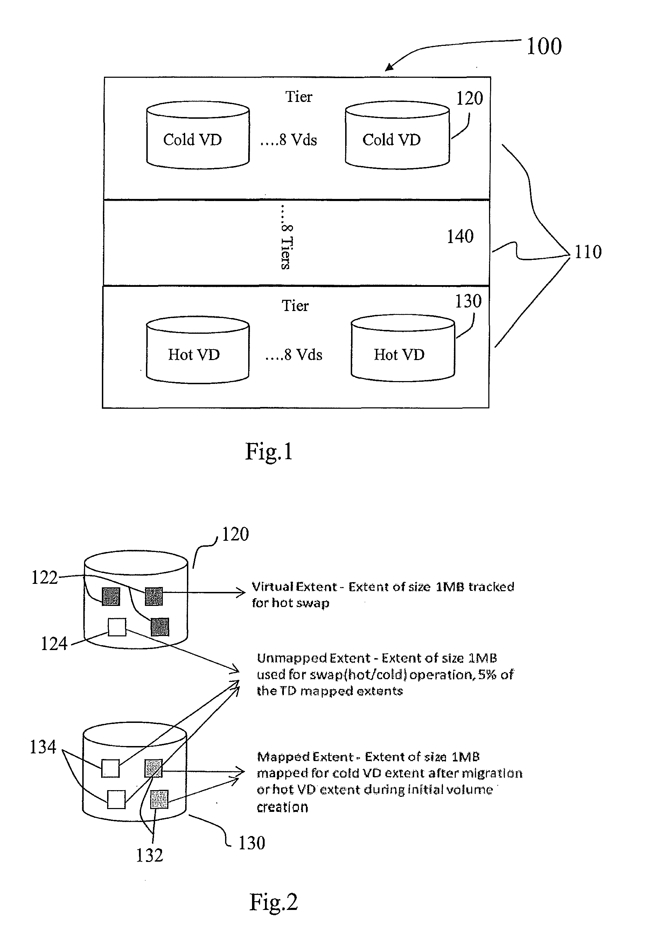

Figure 1 is a diagram of tier drive layout. The tier drive 100 shows a plurality of drive levels 110. The TD is created on VDs and exposed to a host as a new logical drive. The creation of the VDs is known in the art. The top layer of the TD represents the cold tier, or the cold VD. In an embodiment of the invention, there is a plurality of cold VDs 120. The bottom layer of the TD represents the hot tier, or the hot VD. In an embodiment of the invention, there is a plurality of hot VDs 130. In between the cold VD 120 and the hot VD is a plurality of intermediate VDs 140 which will range in importance, depending on policy preferences, from cold to hot.

For every data migration a transaction is created. The transaction may contain mapped and unmapped changes as explained in this description. A new transaction may be created for every swap operation. A transaction contains mapped and unmapped extents changes. A write journal may be added to every migration. After reboot a write journal will be applied to the metadata area in memory and metadata disk area. In order to provide increased data integrity, a block level sequence number and CRC may be maintained for a secondary and primary copy.

The metadata manager will write metadata on to the disk one by one or in contiguous blocks of size 256K. The size of the blocks can be increased or decreased for performance requirements depending on the hot tier specification. If a transaction spreads across multiple blocks, then the metadata may be in an inconsistent state if power is interrupted possibly leading to data corruption. By implementing a metadata journal, transaction records are tracked in persistent storage area, for instance a space reserved in a metadata region which can apply the journal entries during boot-up thereby achieve an automaticity to metadata updates. In an embodiment of the invention, only one copy of the journal is maintained. If a journal entry is unavailable or cannot otherwise be read, then the entire TD will not be online.

Figure 2 is a diagram of Virtual, mapped extent and unmapped extent. A cold VD 120 contains at least one and possibly a plurality of virtual extents 122. These virtual extents 122 can be of an extent size of 1 MB and tracked for hot swap. A hot VD 130 contains at least one and possibly a plurality of mapped extents 132. These mapped extents 132 may be of an extent size of 1MB. The mapped extents 132 are mapped for cold VD extent after migration or hot VD extend during initial volume creation. Each of the cold VD 120 and hot VD 130 comprise at least one and possibly a plurality of unmapped extents 124,134. The unmapped extent 124,134 may be of an extent size of 1MB. The unmapped extents 124,134 may be used for swap (hot or cold) operation. 5% of TD hot tier size is reserved for unmapped extents.

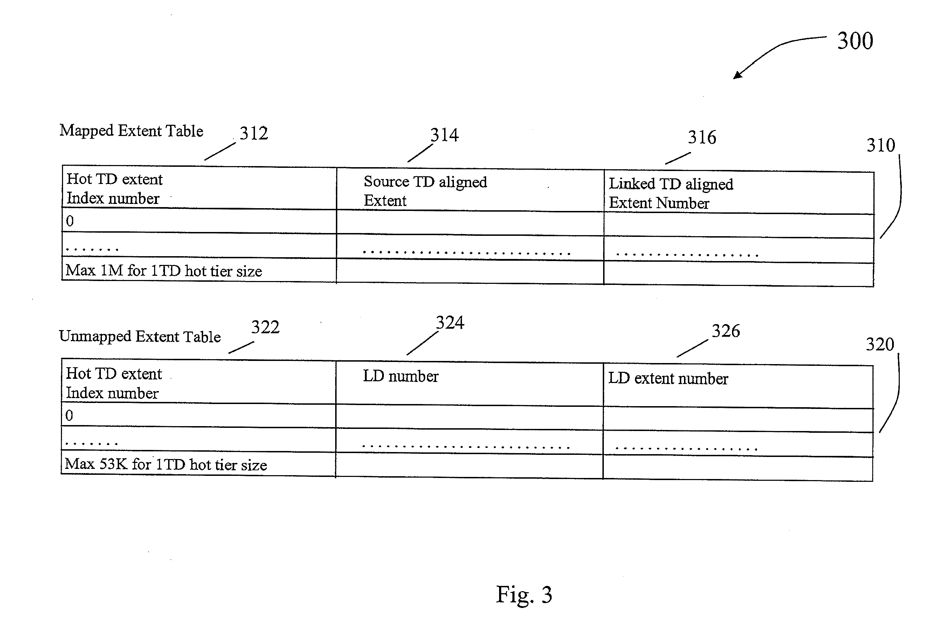

Figure 3 is a representation of mapped and unmapped extent tables 300. A mapped extent table 310 comprises a hot TD extent index number 312, a source TD aligned extent 314 and a linked TD aligned extent number 316. An unmapped extent table 320 comprises a hot TD extent index number 322, a LD number 324 and a LD extent number 326.

When an initial layout is created, a source TD aligned extent 314 may contain the TD aligned extend number 312 and linked TD aligned extend number 316 would be invalid. The unmapped extent table 320 contains the TD extents which do not have any host data. The 5% of TD hot tier size is reserved for unmapped extents and that 5% is not available to a user during TD creation. After migration, the unmapped area can be located in a cold or a hot tier. It is understood that the size of the unmapped extent table can be reduced by keeping TD aligned extent instead of LD target number and ID extent number.

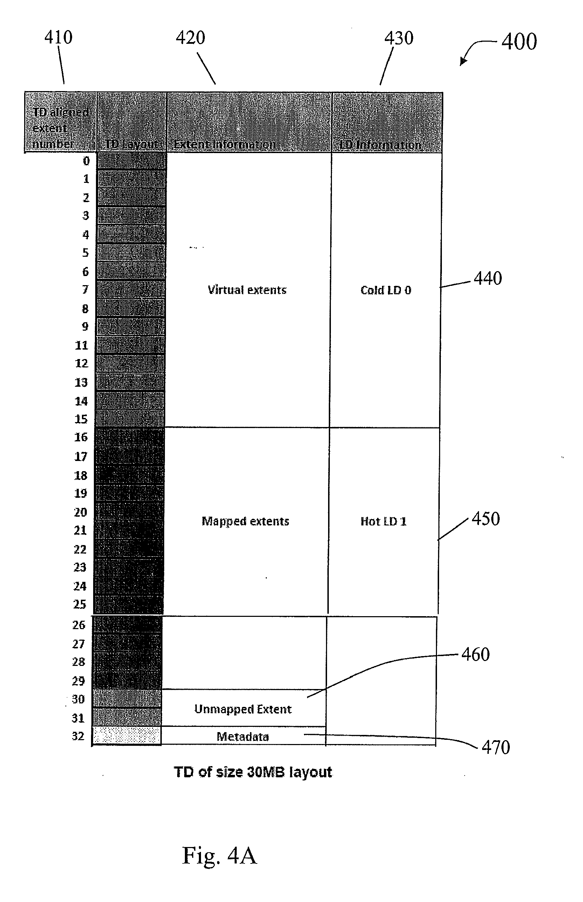

Cold swap and hot swap operations are background operations. A cold swap is a migration of data from a hot VD extent area to unmapped cold extent area and updating the metadata for mapped and unmapped extents accordingly. Similarly, a hot swap is a migration of data from a cold tier to a hot tier and updating metadata information. If a cold tier linearly mapped extent data which is currently in a hot tier but which the system wants to move back to cold tier, then it will be moved back to its original linear mapped location on the cold tier. For example, consider a TD with 15MB cold tier and a 17 MB hot tier. The two unmapped extents will be combined to so that there is one extra unmapped extent for understanding the layout. For a 1TB hot tier size, 18MB of metadata is needed (8MB for mapped and 410KB for unmapped extents, headers for each primary and secondary data). Figure 4a is an example of a TD layout. The TD layout 400 is comprised of a series of TD aligned extent numbers 410, an extent information 420 and LD information 430. The TD size is the sum of the VD sizes (Virtual extents 440, mapped extents 450, unmapped extents 460 and metadata 470), minus the unmapped extent 460 size and the metadata size. For the TD of Figure 4a, which is 30MB, the TD size is 33MB - 2MB -1MB = 30MB.

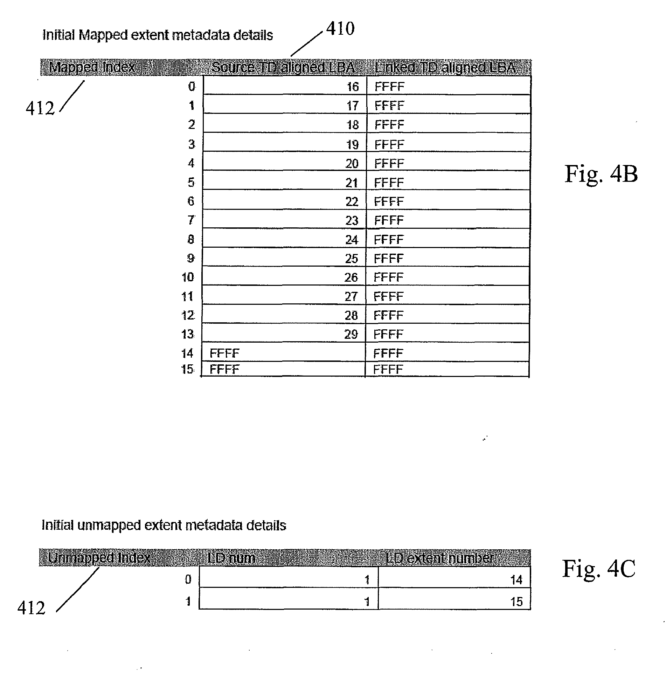

Figure 4b shows the initial mapped extent metadata details of Fig 4a. The Source TD aligned numbers 410 correspond to the source TD aligned numbers of Figure 4a (16-29). The mapped index 412 runs from 0 to 15. Figure 4c shows the initial unmapped extent metadata details of Fig. 4a. The unmapped index 412 runs from 0 to 1.

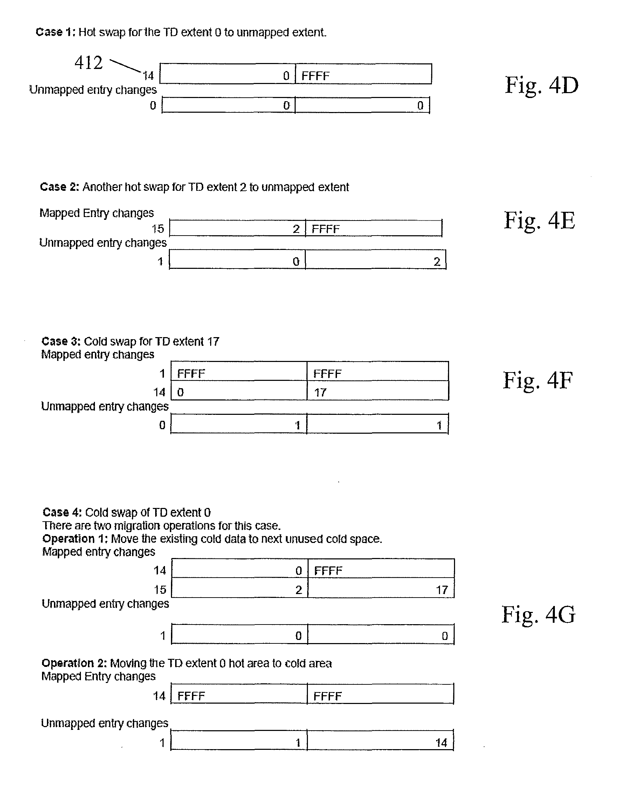

Figure 4d shows the entry changes of a hot swap for the TD extent 0 to unmapped extent for Fig. 4b and 4c. Index 14 412 relates to index 14 of Fig. 4b and index 0 412 relates to index 0 of Fig. 4c.

Figure 4e shows a hot swap for TD extent 2 to unmapped extent. The mapped entry changes are indicated for index 15 412. The unmapped entry changes are indicated for index 1 412.

Figure 4f shows a cold swap for TD extent 17. The mapped entry changes are indicated for index 1 and 14 412. The unmapped entry changes are indicated for index 0 412.

Figure 4g shows a cold swap of TD extent 0. The mapped entry changes are indicated for index 14 and 15 412. The unmapped entry changes are indicated for index 1 412. There are two migration operations for this example. The first operation involves moving the existing cold data to the next unused cold space. The second operation involves moving the TD extent 0 hot area to the cold area.

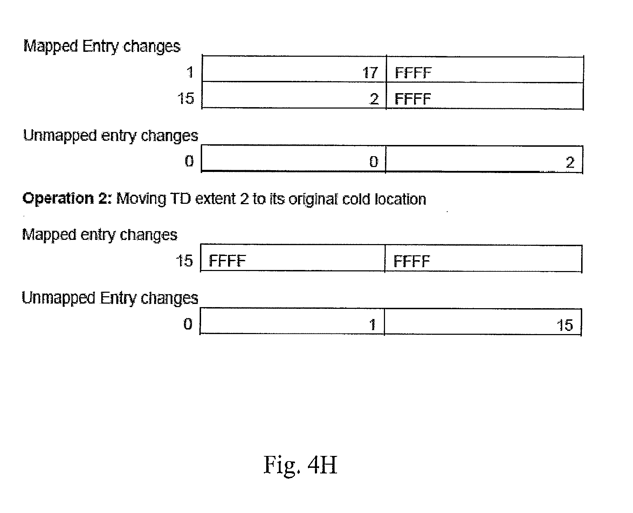

Figure 4h shows a cold swap of TD extent 2. TD extent 2 is currently hot in the examples being shown. The mapped entry changes are indicated for index 1 and 15 412. The unmapped entry changes are indicated for index 0 412. There are two migration operations for this example. The first operation involves moving linked extend to its next unmapped cold location. Since there is no unmapped location in cold, it therefore goes to its original location instead of moving it anywhere else. If TD extent 17 were moved to hot extent 14 and avoided swapping the cold extent 2 to its original location, then the number of free hot extents could possibly be lost. The purpose of the invention is not served by moving the cold extent 2. Instead of moving extent 17 to its original location, TD extent 17 is moved to the hot 14 thus complicating the operation. In the embodiment of the invention, the operation is kept simple when an extent is moved from its mapped location to its original (hot or cold) location. The second operation involves moving TD extent 2 to its original cold location.

In an embodiment of the invention, the virtual extents are tracked based on the access count for moving to a hot region. The access count used can be tracking information or other information. Similarly, the mapped extents (hot region) are tracked based on the access count for moving to a cold region. Once a virtual extent is ready, i.e. the extent has acquired a sufficient number of access counts, to move to a hot region, it is qualified to enter into a heat index bucket after allocating a mapped extent. The least recently accessed list would track the accesses of an extent.

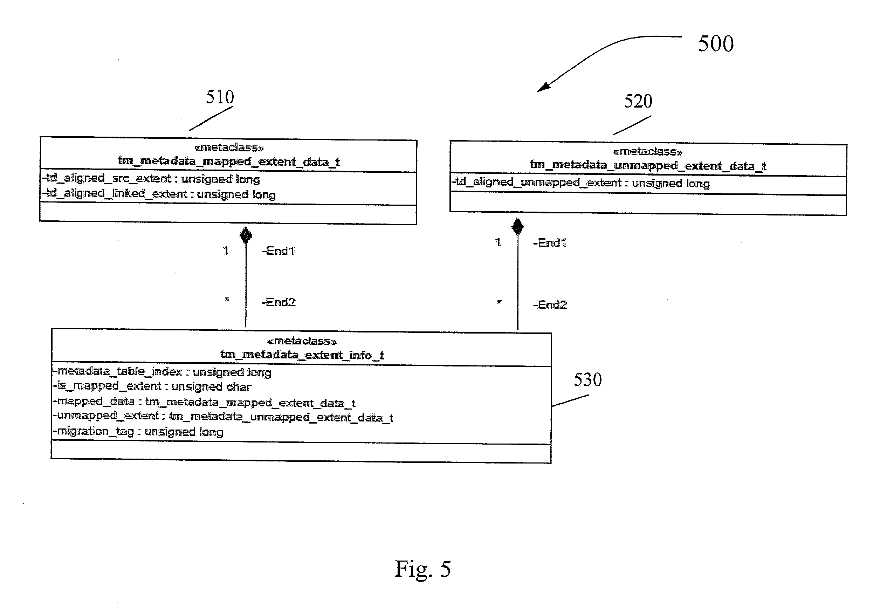

Figure 5 shows the data structures of a metadata design. The metadata design 500 comprises a mapped structure 510, an unmapped structure 520 and a migration model 530. The structure tm_metadata_mapped_extent_data_t 510 is used for passing data from a migration component to the metadata module. It is also on disk data format for mapped extent information. The structure tm_metadata_unmapped_extent_data_t 520 is used for passing data from migration component to the metadata module and is also on disk data format for unmapped extent information.

The structure tm_metadata_extent_info_t is passed from migration manager for "put" and "get" operations. As discussed previously, the metadata_table_index field has the index into mapped or unmapped array. The field is_mapped_extent would contain "true" if the migration module requires mapped extent information. Mapped_data has mapped_extent information and unmapped_extent contains unmapped extent information. The migration module passes migration_tag. It can subsequently use that to cancel the metadata updating. This enables rollback semantics.

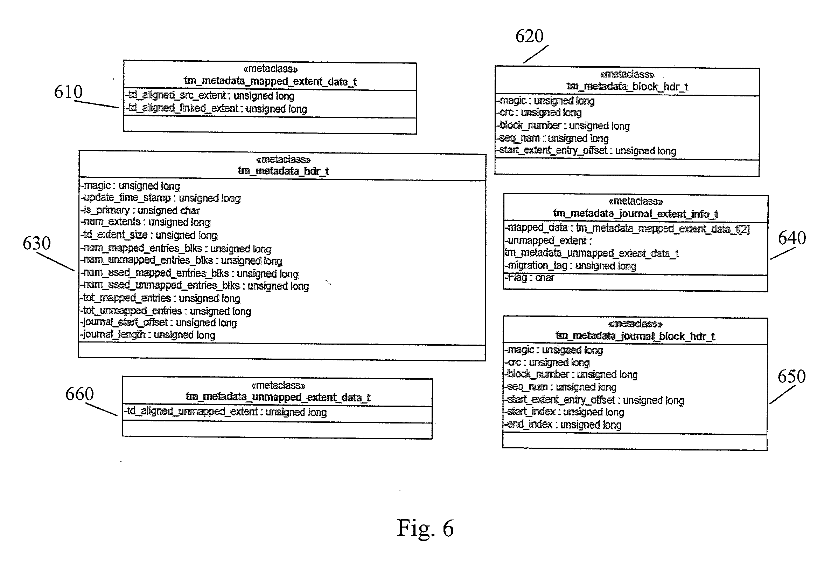

Figure 6 show a data format for metadata on a disk. The On Disk Data Structure 600 comprises mapped structure 610, a block header structure 620 for mapped and unmapped blocks, a metadata header structure 630, a journal structure 640, a journal block header structure 650 and an unmapped structure 660.

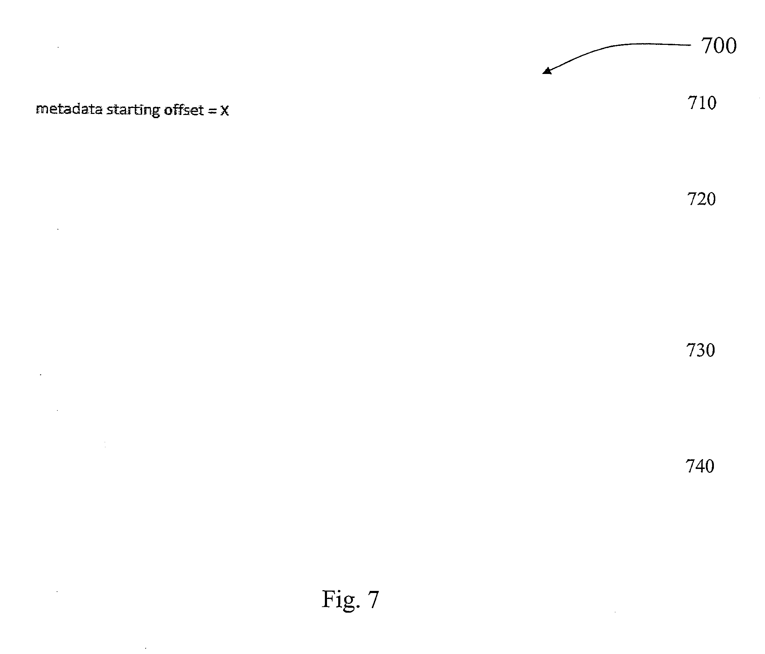

Figure 7 shows on metadata layout on a disk. The layout 700 comprises a metadata header block 710, a write journal area 720, a mapped extent area 730 and an unmapped extent area 740. The TD persistent data (DDF data) will have a pointer to the metadata area inside a VD and that is called as X in figure 7. The tm_metadata_hdr_t 710 is kept at the starting of metadata layout. The next 256K block is reserved for the write journal 720 and tm_mtedata_journal_block_hrt_t is written at the X+256K as shown in Figure 7. Afterward the metadata array of tm_metadata_journal_extent_info_t is persisted. The metadata mapped sections start at X+256K+256K and every block of 256K will start with tm_metadata_block_hdr_t. The tm_metadata_block_hdr_t will have CRC and sequence numbers associated with that block. The remaining part of the unmapped section will be mapped as an array oftm_metadata_unmapped_extent_data_t. The 256K as a block size is used as an example because for an SSD drive, performance is enhanced. However, it is understood that different block size are selectable to optimize for different selected VD sizes for better performance, write endurance and life. The sequence number, CRC, magic, block number of every block is utilized for validating the block entry during reboot. The proper block from primary or secondary storage is selected.

The metadata header also has magic, number a field to differentiate_primary or secondary storage and to identify the metadata block. The header contains fields for keeping number of mapped entries, number of unmapped entries and journal start address. The field TD extent size is used for foreign import.

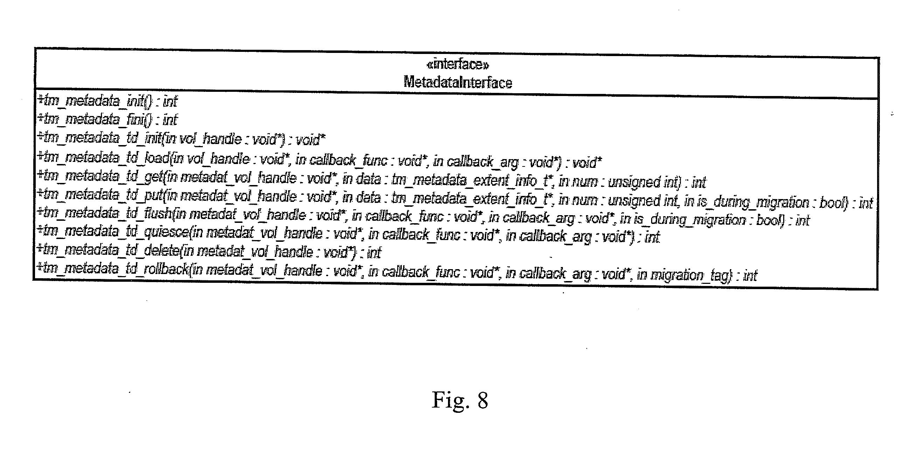

In an embodiment of the invention, the following are metadata operations, Figure 8:

### tm_metadata_init

In an embodiment of the invention, this is called during system boot for module level initialization of memory and other resources.

### Tm_metadata_fini

In an embodiment of the invention, this is called during system shutdown for module level memory and other resource cleanup.

### Tm_metadata_mgr_td_init

In an embodiment of the invention, this identifies the VDs that are part of the hot tier within the TD. It carves out space for storage of the metadata within the VDs that form the hot tier as mentioned in Figure 7. It pre-allocates enough space on the hot tier to support up to 1TB of hot-tier secondary storage per TD regardless of the TD size at creation time. The metadata headers are updated in core memory, but a subsequent flush flushes the headers, journal initial entries and mapped/unmapped initial entries once. It also may allocate the memory mapped, unmapped and journal buffers.

### Tm_metadata_td_load

In an embodiment of the invention, this is invoked when a TD is brought online or during reboot. This application programming interface (API) populates the on-disk metadata layout into the memory that includes headers, journal entries, mapped entries and unmapped entries. This also selects the latest copy of metadata using the block level sequence number. Further, it reapplies the journal entries starting from the start index to the end index to get proper data in the memory. It updates the primary and secondary copy with a validated in-core copy. Finally, it will invoke a callback procedure passed by the caller to indicate the completion of the metadata update. A callback is a reference to executable code, or a piece of executable code, that is passed as an argument to other code. This allows a lower-level software layer to call a subroutine (or function) defined in a higher-level layer.

### Tm_metadata_td_get

In an embodiment of the invention, this will pass the extent information after a load is invoked to the caller

### Tm_metadata_td _put

In an embodiment of the invention, the migration module will, after a hot/cold swap operation, use this API to update metadata changes in-core areas of the metadata. The module will add the entries into the current transaction.

### Tm_metadata_td_flush

In an embodiment of the invention, after completing the put operations for various extents, migration module uses this to complete the transactions to persist the metadata which is passed using Tm_metadata_td_put The migration module will add the current transaction to the write journal queue. If the write journal persistence on-disk is currently not in progress, it will start the write journal. The write journal will likely complete a 256K block quickly. After completion of the write journal block, the transaction moves to the metadata write in 256K block sizes. Only blocks which have changed will be written for this transaction. After completing the affected metadata updating if there is a transaction that is pending for the write journal, it will start the journal entry for that transaction. After completing all affected blocks for a particular transaction, it will invoke a callback passed to the flush operation.

### Tm_metadata_td_quiesce

In an embodiment of the invention, this API will be called to ensure that all metadata manager operations on a given TD have been completed and that no new metadata operations are scheduled to be started. This API may also be invoked at the time of deleting a TD to ensure that any outstanding IOs to a backend VD have been cleared or finished. After all pending operations are completed; a callback is called with a callback argument.

### Tm_metadat_td_delete

In an embodiment of the invention, this releases metadata buffers allocated during init for mapped, unmapped and journal entries.

### Tm_metadata_td_roflback

In an embodiment of the invention, this is called by the migration module to remove the metadata having passed a migration tag.

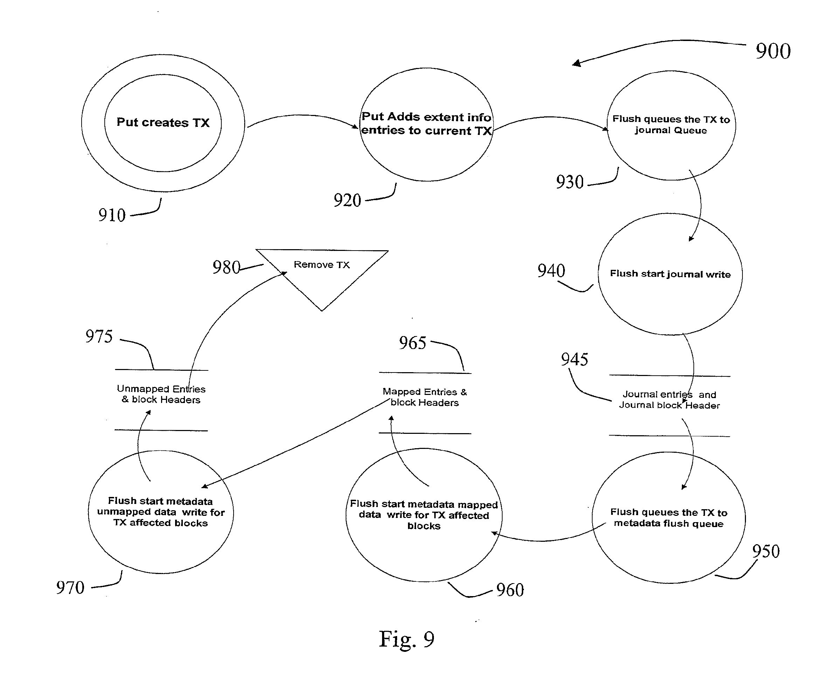

Figure 9 is transaction entry state diagram for a swap operation. The swap operation 900 shows the steps of metadata updating for a transaction. The transaction is created for a swap operation that contains mapped and unmapped entries that are modified. In a first step 910 a tm_metadata_put (put) creates a transaction if there is no current transaction entry. In the next step 920, the put adds extent information entries to the current transaction. In the next step 930, a flush queues the transaction to a journal queue. In the next step 940, atm_metadata_flush (flush operation) starts a journal write. The journal write of step 940 is shown in Figure 9 as journal entries and a journal block entry 945. The operation then queues the transaction metadata flush queue 950. After moving the metadata flush queue, the metadata modules picks up the transaction and updates the blocks of metadata areas (mapped and unmapped) based on the transaction metadata information and flushes only the affected blocks 960,965,970,975. The CRC is calculated for every block, and the sequence number. The primary and secondary area of metadata is updated. After the metadata flush is completed, the swap operation is completed 980.

After a reboot, the metadata area, both mapped and unmapped, will be read from the disk. Journal transactions entries will be applied starting from the oldest journal entry. A CRC for every block will be calculated and the sequence number for every metadata block will be updated. The journal metadata area will then be cleared for next updates. The updated metadata blocks will be persisted in the metadata area.

In the event that there is a power failure during the metadata update after the step of moving the current transaction metadata flush queue 950, then the mapping information will be recovered by the write journal entry. If there is a power failure after the step to flush the current transaction to metadata 930 but prior to the journal writes of step 940, then there will not be a metadata entry. In this instance the original extent will have the data.

Writing data to locations in memory may potentially leave others with inconsistent data. This problem might be solved by using non overlapping memory layouts for different address spaces or otherwise the memory (or part of it) must be flushed when the mapping changes. Also, CRC is a cyclic redundancy check. This is an error-detecting code commonly used in digital networks and storage devices to detect accidental changes to raw data. Blocks of data entering these systems get a short check value component attached, based on the remainder of a polynomial division of their contents. On retrieval, the calculation is repeated and corrective action can be taken against presumed data corruption if the check values do not match. The "check" value is normally a redundancy as it adds no information to the data and the algorithms are relatively simple to implement. It is understood by those skilled in the art that flushing and CRC implementation are examples of the means available to maintain data integrity. The update sequence number will decide the latest copy of data, the block number will give addition data consistency checking, and primary and secondary will helps to recover from block level failures.

The foregoing description of the invention has been presented for purposes of illustration and description. It is not intended to be exhaustive or to limit the invention to the precise form disclosed, and other modifications and variations maybe possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A method of metadata persistence in a swapping operation for a tier-drive system, said method comprising:
creating a current transaction entry;
adding metadata changes to the transaction entry, said extent information comprising mapped and unmapped information;
flushing the transaction entry to the metadata disk area by writing, by a write journal, the current transaction entry into a next free entry location in the write journal;
updating, by the metadata module, the metadata area based on the current transaction metadata information for the blocks that are affected .

2. The method of claim 1, further comprising:
calculating a CRC sequence number and block number for every metadata block and keeping a primary and secondary copy.

3. The method of claim 1, wherein said tier drive system is a RAID system.

4. The method of claim 1, further comprising:
if an interruption to the power to the tier-drive occurs subsequent to flushing the transaction entry, recovering mapped and unmapped information via the write journal.

5. A system for metadata persistence when moving data between tiers in a tier-drive system, comprising:
a host computer;
a metadata module, said module comprising a plurality of extents of information; and a write journal;
wherein a current transaction entry is created by the host computer and extent information is added to the transaction entry, the transaction entry is flushed to metadata in the metadata module, the transaction is queued to a queue in the write journal, wherein the write journal writes the current transaction entry into a next free entry location and the metadata module updates the metadata based on the current transaction metadata information and flushes any blocks of data that are affected.
